# EUROPEAN PATENT APPLICATION

(11) **EP 4 488 280 A1**
(43) Date of publication of application: **08.01.2025**
(21) Application number: 23763279.9
(22) Date of filing: 17.02.2023
(51) Int. Cl.: C07F 7/18, C08G 77/14

(54) **HYDROXYL GROUP-CONTAINING ORGANOSILICON COMPOUND**

(30) Priority: 02.03.2022 JP 2022031383
(71) Applicant: SHIN-ETSU CHEMICAL CO., LTD., Tokyo 1000005 (JP)
(72) Inventor: SAKUTA Koji, Annaka-shi, Gunma 379-0224 (JP); ANDO Yuji, Annaka-shi, Gunma 379-0224 (JP); MEGURIYA Noriyuki, Annaka-shi, Gunma 379-0224 (JP)
(74) Representative: Mewburn Ellis LLP
(86) International application number: PCT/JP2023/005770
(87) International publication number: WO 2023/167020

(57) **Abstract**

Provided is a hydroxyl group-containing organosilicon compound represented by general formula (1).

(R¹₃SiO_{1/2})ₖ(R¹₂SiO_{2/2})ₚ(R¹SiO_{3/2})_{q}(SiO_{4/2})ᵣ (1)

[In formula (1), R¹ is a group selected from a monovalent hydrocarbon group and a group represented by formula (2), provided that at least one of all R¹ groups is a group represented by formula (2). k > 0, p ≥ 0, q ≥ 0 and r ≥ 0, provided that k+p+q ≥ 2.] 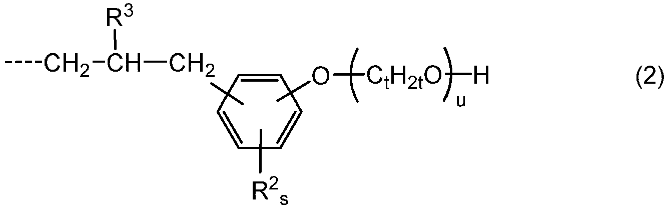 (In formula (2), R² is a hydrogen atom or a group selected from a monovalent hydrocarbon group and an alkoxy group, and R³ is a hydrogen atom or a methyl group. s is an integer of 0-4, t is an integer of 2-4 and u is a numerical value of 1-3. The broken line represents a bond.)

## Description

### TECHNICAL FIELD

The present invention relates to a hydroxyl group-containing organosilicon compound. More specifically, the invention relates to a novel organosilicon compound having on the molecule an organopolysiloxane group and a hydroxyl group.

### BACKGROUND ART

Hydroxyl group-containing polysiloxanes are used in a variety of applications, including paint additives and resin modifiers.

Resin modifiers are employed in, for example, the synthesis of urethane resins by the reaction of a hydroxyalkyl group-containing polysiloxane with an isocyanate compound (Patent Documents 1 and 2), the synthesis of polyester resins by the reaction of a hydroxyalkyl group-containing polysiloxane with a carboxyl compound (Patent Document 3), and the synthesis of polycarbonate resins by the reaction of a phenolic hydroxyl group-containing polysiloxane with a carbonic acid ester (Patent Document 4).

The heat resistance, cold resistance, water resistance, chemical resistance, impact resistance, electrical properties, gas permeability and the like characteristic of siloxanes can be improved by using a hydroxyl group-containing polysiloxane during resin synthesis. However, phenolic hydroxyl groups have a low reactivity with isocyanate groups and so phenolic hydroxyl group-containing polysiloxanes are not used in urethane resin synthesis.

General-purpose hydroxyalkyl group-containing polysiloxanes can be obtained by a hydrosilylation reaction between allyl glycol and a hydrogen polysiloxane (Patent Document 5).

However, because allyl glycol and hydrogen polysiloxanes have a low compatibility, reacting them in the absence of a solvent requires the use of a large excess of allyl glycol with respect to the hydrosilyl groups.

This is resolved by using an alcohol solvent such as ethanol or 2-propanol at the time of the hydrosilylation reaction, which raises the reactivity.

Yet, by-products of the dehydrogenation reaction between hydroxyl groups on the solvent and hydrosilyl groups on the hydrogen polysiloxane also readily arise.

Hydroxyalkyl group-containing polysiloxanes obtained from allyl glycol and hydrogen polysiloxanes also have the drawback of a low heat resistance.

Hence, there exists a desire for a hydroxyl group-containing polysiloxane compound which is easy to synthesis, results in little by-product and has a high heat resistance.

### PRIOR ART DOCUMENTS

### PATENT DOCUMENTS

Patent Document 1: JP-A 2001-500912
Patent Document 2: JP-A 2003-165822
Patent Document 3: WO 2012/137837
Patent Document 4: JP-A 2012-246430
Patent Document 5: JP-A 2014-224060

### SUMMARY OF INVENTION

### TECHNICAL PROBLEM

In light of the above, the object of the present invention is to provide a novel hydroxyl group-containing organosilicon compound which is easy to synthesis, results in little by-product and has an excellent heat resistance.

### SOLUTION TO PROBLEM

The inventors have conducted intensive investigations in order to achieve the above object. As a result, they have discovered that hydroxyl group-containing organosilicon compounds having the specific structure represented by general formula (1) below are easy to synthesize, result in little by-product and have an excellent heat resistance. This discovery ultimately led to the present invention.

Accordingly, the invention provides:
1. A hydroxyl group-containing organosilicon compound of general formula (1) below

   (R¹₃SiO_{1/2})ₖ(R¹₂SiO_{2/2})ₚ(R1SiO_{3/2})_{q}(SiO_{4/2})ᵣ (1)

   [wherein each R¹ is independently a group selected from monovalent hydrocarbon groups of 1 to 10 carbon atoms and groups of formula (2) below, with the proviso that at least one of all the R¹ groups is a group of formula (2) below; k, p, q and r are numbers such that k > 0, p ≥ 0, q ≥ 0 and r ≥ 0, with the proviso that k+p+q ≥ 2; and the respective siloxane units shown in parentheses are bonded in any order 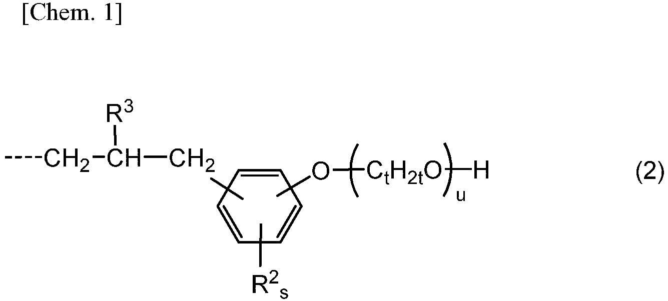 (wherein each R² is independently a hydrogen atom or a group selected from monovalent hydrocarbon groups of 1 to 5 carbon atoms and alkoxy groups of 1 to 5 carbon atoms, R³ is a hydrogen atom or a methyl group, s is an integer from 0 to 4, t is an integer from 2 to 4, u is a number from 1 to 3, and the dashed line represents an available bond)];
2. The hydroxyl group-containing organosilicon compound of 1 above, wherein the groups of formula (2) are groups of any of formulas (3) to (5) below 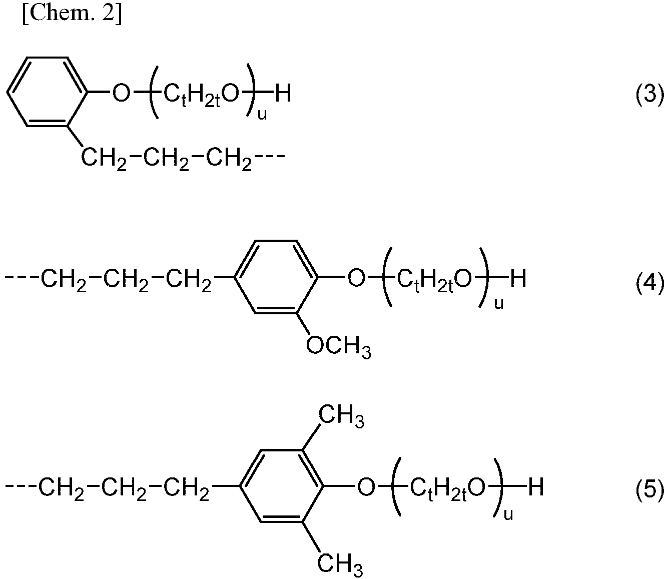 (wherein t and u are the same as above and the dashed line represents an available bond);
3. The hydroxyl group-containing organosilicon compound of 1 or 2 above wherein, in formula (1), k is a number from 2 to 5, p is a number from 2 to 100, q is a number from 0 to 3, r is 0 and from 2 to 5 of the R¹ groups are groups of formula (2);
4. The hydroxyl group-containing organosilicon compound of any of 1 to 3 above, wherein the compound is the product of an addition reaction between an organohydrogenpolysiloxane of general formula (6) below

   (R⁴₃SiO_{1/2})ₖ(R⁴₂SiO_{2/2})ₚ(R⁴SiO_{3/2})_{q}(SiO_{4/2})ᵣ (6)

   (wherein each R⁴ is independently a hydrogen atom or a monovalent hydrocarbon group of 1 to 10 carbon atoms, with the proviso that at least one of all the R⁴ groups is a hydrogen atom; and k, p, q and r are the same as above; and the respective siloxane units shown in parentheses are bonded in any order) and a compound of general formula (7) below containing a hydroxyl group and an aliphatic unsaturated group 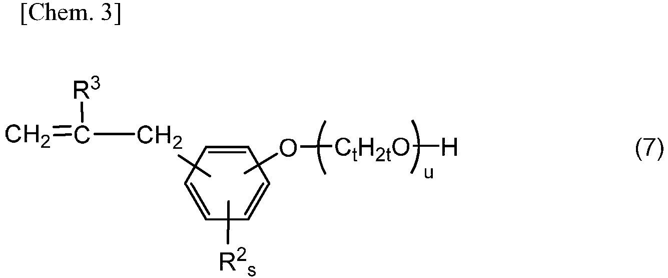 (wherein R², R³ s, t and u are the same as above);
5. The hydroxyl group-containing organosilicon compound of 4 above wherein the compound of general formula (7) containing a hydroxyl group and an aliphatic unsaturated group is a compound of any of formulas (8) to (10) below 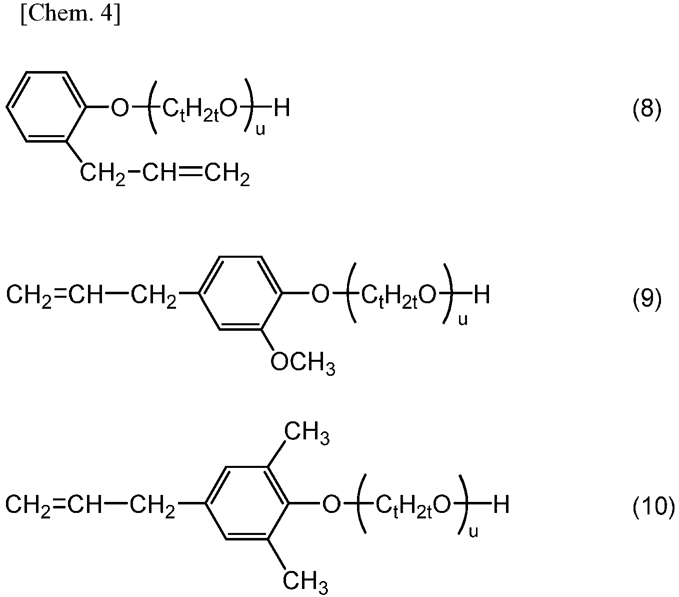 (wherein t and u are the same as above); and
6. The hydroxyl group-containing silicon compound of 4 or 5 above wherein, in formula (6), k is a number from 2 to 5, p is a number from 2 to 100, q is a number from 0 to 3, r is 0 and from 2 to 5 of all the R⁴ groups are hydrogen atoms.

### ADVANTAGEOUS EFFECTS OF INVENTION

The organosilicon compound of the invention has a highly reactive hydroxyl group and a high heat resistance. Moreover, because the organosilicon compound of the invention suppresses by-product formation and can be efficiently obtained, it is useful as a synthesis starting material and modifier for various types of resins.

### DESCRIPTION OF EMBODIMENTS

The invention is described in detail below.

### [Hydroxyl Group-Containing Organosilicon Compound]

The hydroxyl group-containing organosilicon compound of the invention is a compound of general formula (1) below.

(R¹₃SiO_{1/2})ₖ(R¹₂SiO_{2/2})ₚ(R¹SiO_{3/2})_{q}(SiO_{4/2})ᵣ (1)

In formula (1), each R¹ is independently a group selected from monovalent hydrocarbon groups of 1 to 10 carbon atoms and groups of formulas (2) below, with the proviso that at least one of all the R¹ groups is an organic group of formula (2) below. Preferably, from 2 to 5 of all the R¹ groups are organic groups of formula (2) below. 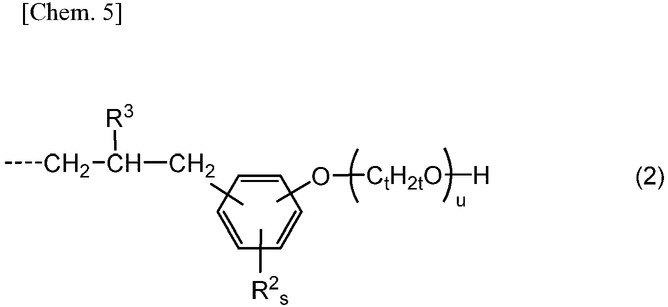 In formula (2), the dashed line represents an available bond.

The monovalent hydrocarbon groups of 1 to 10 carbon atoms represented by R¹ may be linear, branched or cyclic. Examples include alkyl groups of 1 to 10 carbon atoms, preferably 1 to 6 carbon atoms and more preferably 1 to 3 carbon atoms; cycloalkyl groups of 5 to 10 carbon atoms, and preferably 5 to 8 carbon atoms; aryl groups of 6 to 10 carbon atoms, preferably 6 to 8 carbon atoms; and aralkyl groups of 7 to 10 carbon atoms.

Specific examples of the monovalent hydrocarbon groups of R¹ include alkyl groups such as methyl, ethyl, n-propyl, isopropyl, n-butyl, isobutyl, s-butyl, t-butyl, n-pentyl, n-hexyl, n-heptyl, n-octyl, n-nonyl and n-decyl groups; cycloalkyl groups such as cyclopentyl and cyclohexyl groups; aryl groups such as phenyl and tolyl groups; and aralkyl groups such as benzyl and phenethyl groups.

Of these, methyl, ethyl and phenyl groups are preferred as the R¹ groups.

In Formula (2), each R² is independently a hydrogen atom or a group selected from monovalent hydrocarbon groups of 1 to 5 carbon atoms and alkoxy groups of 1 to 5 carbon atoms.

The monovalent hydrocarbon groups of 1 to 5 carbon atoms represented by R² may be linear or branched. Specific examples include, of the groups mentioned for R¹, groups similar to the linear or branched groups of 1 to 5 carbon atoms; of these, methyl, isopropyl and t-butyl groups are preferred.

The alkoxy groups of 1 to 5 carbon atoms represented by R² are preferably ones having from 1 to 3 carbon atoms. Specific examples include methoxy, ethoxy, n-propoxy, isopropoxy, n-butoxy and n-pentoxy groups. Of these, methoxy and ethoxy groups are preferred.

R³ is a hydrogen atom or a methyl group.

In formula (2), s is an integer from 0 to 4, preferably an integer from 0 to 2.

The letter `t' is an integer from 2 to 4, and is preferably 2 or 3.

The letter `u' is a number from 1 to 3. The recurring unit within parentheses to which `u' is attached may be chemically a single recurring unit or may be a combination of differing recurring units for which the average value is a number from 1 to 3. When u is 0, the hydroxyl group is phenolic and the reactivity to isocyanate groups, for example, is low. Hence, u is 1 or more. Instances in which there is a combination of differing recurring units are also not included when u is 0. When u is more than 3, the heat resistance decreases, and so instances in which u is 4 or more are also not included. Hence, u is a number from 1 to 3. It is especially preferable for the recurring unit within parentheses to which 'u' is attached to be chemically a single recurring unit.

Examples of groups of formula (2) include, but are not limited to, those having the following formulas.

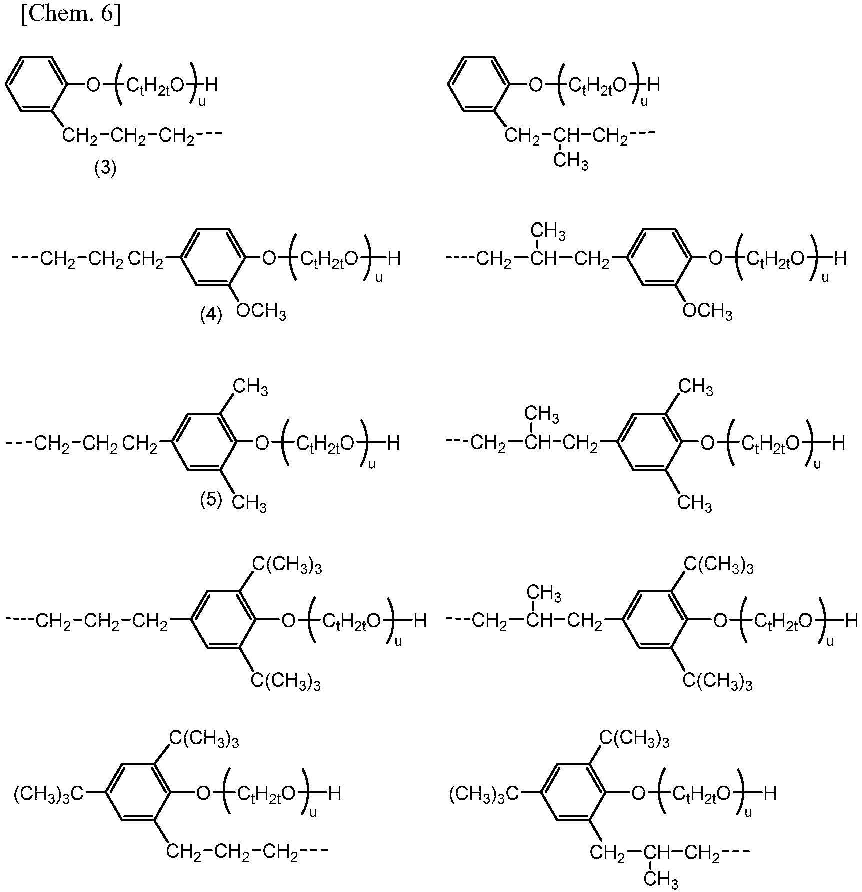

In these formulas, t and u are the same as above, and a dashed line represents an available bond.

Of the above groups, those of formulas (3) to (5) are preferred.

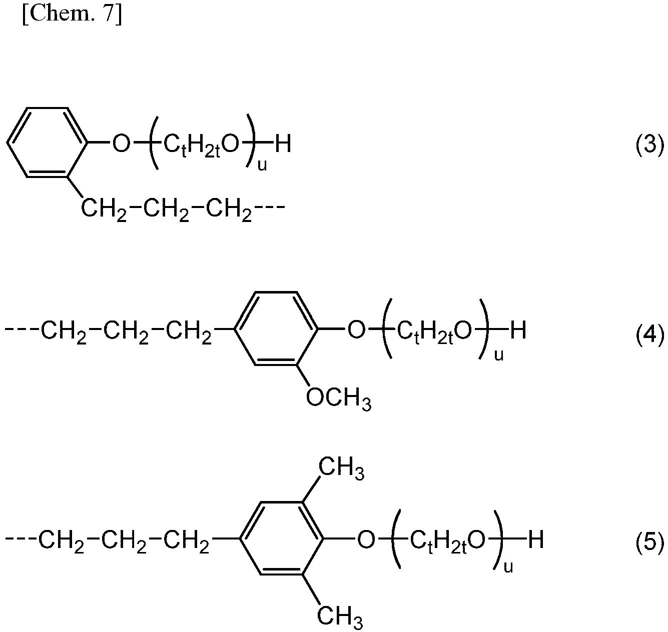

In these formulas, t and u are the same as above, and a dashed line represents an available bond.

Specific examples of the groups of formulas (3) to (5) include, but are not limited to, those having the following formulas. Of these, groups of formulas (3a), (4a) to (4e) and (5a) are preferred.

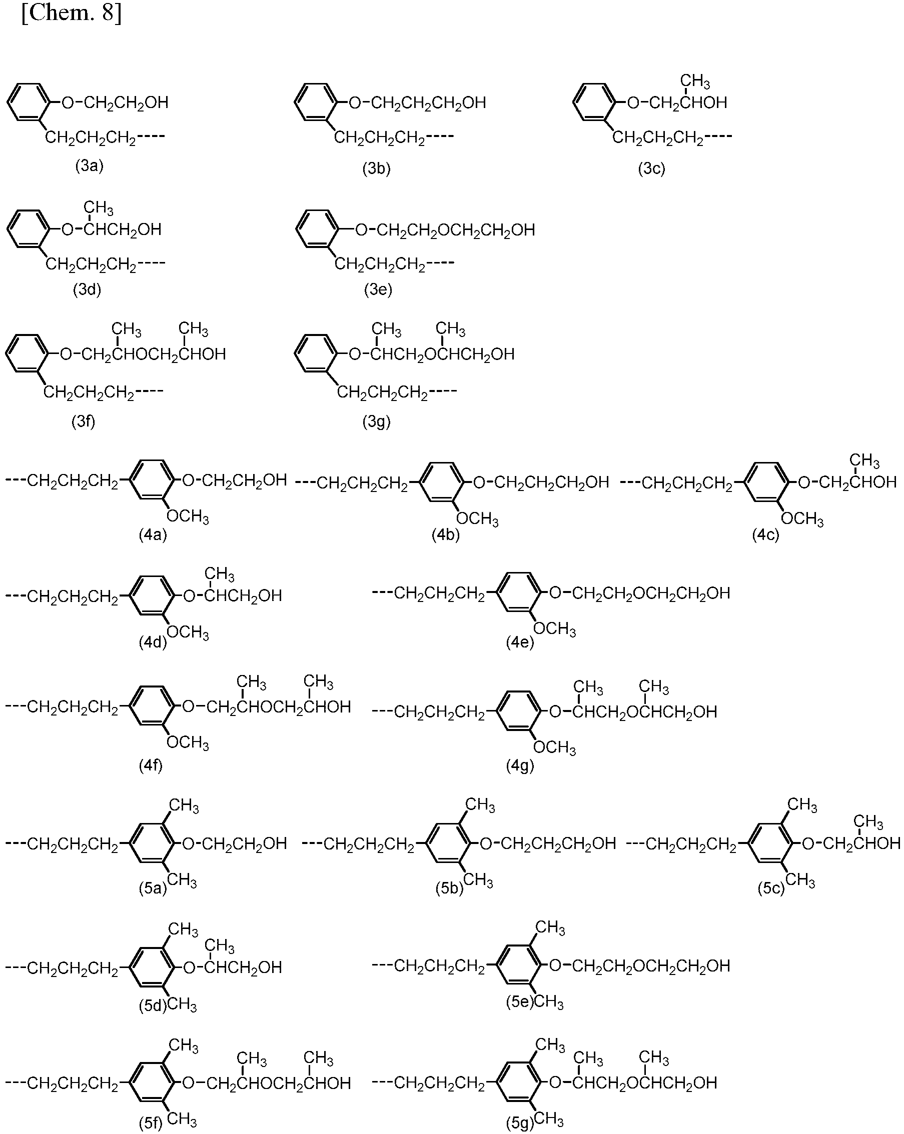

In these formulas, a dashed line represents an available bond.

In Formula (1), k, p, q and r are numbers such that k > 0, p ≥ 0, q ≥ 0 and r ≥ 0, with the proviso that k+p+q ≥ 2.

The letter 'k' is preferably a number from 2 to 5, and more preferably a number from 2 to 4.

The letter 'p' is preferably a number from 2 to 100, and more preferably a number from 5 to 80.

The letter 'q' is preferably a number from 0 to 3, more preferably a number from 0 to 2, and even more preferably 1 or 2.

The letter `r' is preferably a number from 0 to 3, more preferably 0 or 1, and even more preferably 0.

The sum k+p+q is preferably a number such that k+p+q ≥ 5, and more preferably a number such that k+p+q is ≥ 8.

The bonding order of the respective siloxane units shown in parentheses above is not particularly limited; these may be randomly bonded, or a block structure may be formed.

The hydroxyl group-containing organosilicon compound of the invention is preferably one where, in above formula (1), k is a number from 2 to 5, p is a number from 2 to 100, q is a number from 0 to 3, r is 0 and from 2 to 5 of all the R¹ groups are groups of formula (2); and more preferably one where k is a number from 2 to 4, p is a number from 5 to 80, q is a number from 0 to 2, r is 0 and 2 or 3 of all the R⁴ groups are groups of formula (2).

The groups of formula (2) may be located either at one or both ends of the molecular chain or partway along the molecular chain, or may be located at both such places. However, it is preferable for these groups to be located at least at one or both ends of the molecular chain, and more preferable for them to be located at both ends of the molecular chain.

It is especially preferable for the hydroxyl group-containing organosilicon compound of the invention to be one having any of the following formulas 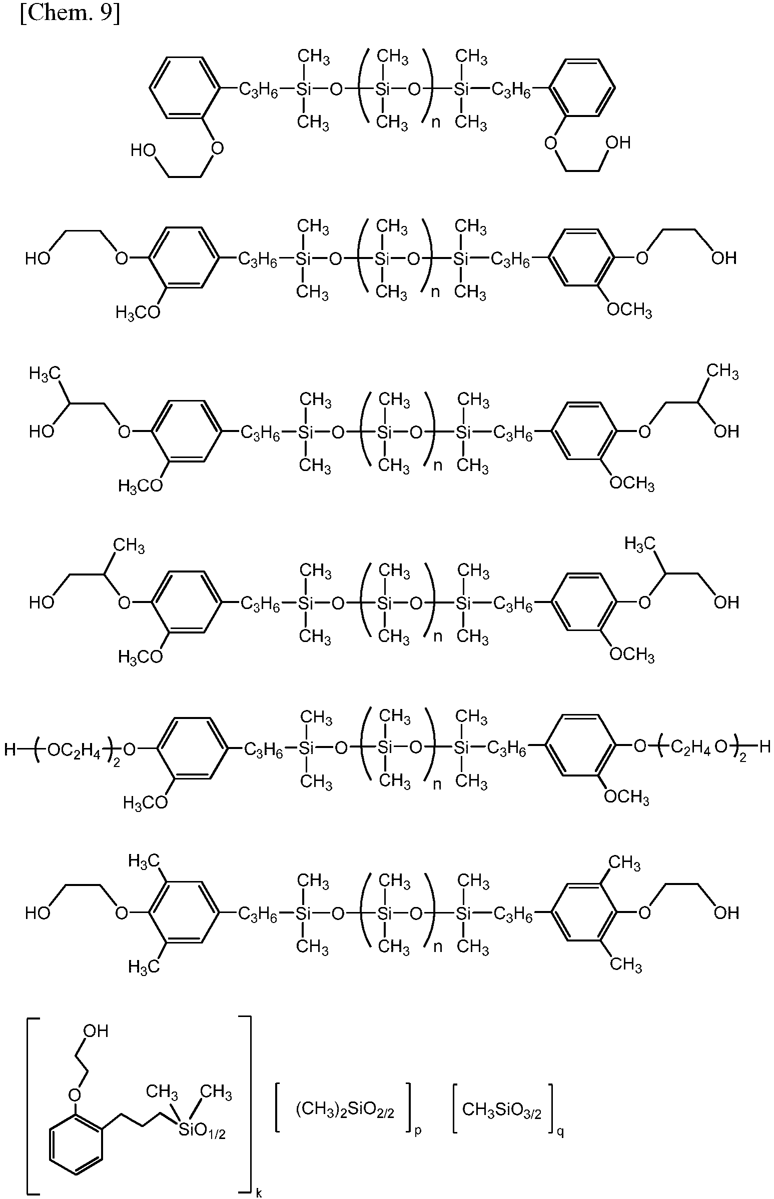 (wherein n is a number such that n ≥ 0, and k, p and q are the same as above).

The hydroxyl group-containing organosilicon compound of the invention has a weight-average molecular weight that is preferably from 400 to 15,000, more preferably from 600 to 10,000, even more preferably from 600 to 8,000, and especially from 600 to 5,000. This weight-average molecular weight is a polystyrene equivalent value obtained by gel permeation chromatography (GPC) measured under the following conditions.

### [Measurement Conditions]

| | |
|---|---|
| Developing solvent: | tetrahydrofuran (THF) |
| Flow rate: | 0.6 mL/min |
| Detector: | differential refractive index detector (RI) |
| Columns: | TSK Guardcolumn SuperH-H |
| | TSKgel SuperHM-N (6.0 mm I.D. × 15 cm column × 1) |
| | TSKgel SuperH2500 (6.0 mm I.D. × 15 cm column × 1) (all products of Tosoh Corporation) |
| Column temperature: | 40°C |
| Amount of sample injected: | 50 µL (0.3 wt% concentration THF solution) |

The hydroxyl group-containing organosilicon compound of the invention has a kinematic viscosity that is preferably from 40 to 10,000 mm²/s, and more preferably from 50 to 5,000 mm²/s. The kinematic viscosity is a value measured at 25°C using the Cannon-Fenske viscometer specified in JIS Z 8803:2011.

### [Method of Preparation]

The hydroxyl group-containing organosilicon compound of the invention can be obtained by the hydrosilylation of an organohydrogenpolysiloxane of general formula (6) below with a compound of general formula (7) below having a hydroxyl group and an aliphatic unsaturated group (allyl group or methallyl group).

### (a) Organohydrogenpolysiloxane

A compound of formula (6) below may be used as the organohydrogenpolysiloxane.

(R⁴₃SiO_{1/2})ₖ(R⁴₂SiO_{2/2})ₚ(R ⁴SiO_{3/2})_{q}(SiO_{4/2})ᵣ (6)

In formula (6), each R⁴ is independently a hydrogen atom or a monovalent hydrocarbon group of 1 to 10 carbon atoms, with the proviso that at least one of all the R⁴ groups is a hydrogen atom. Preferably, from 2 to 5 of all the R⁴ groups are hydrogen atoms.

Examples of the monovalent hydrocarbon groups of R⁴ include groups similar to those mentioned above for R¹. Of these, methyl, ethyl and phenyl groups are preferred.

The letters k, p, q and r are the same as above.

The bonding order of the respective siloxane units shown in parentheses is not particularly limited; the units may be bonded randomly or a block structure may be formed.

The organohydrogenpolysiloxane is preferably one where, in formula (6), k is a number from 2 to 5, p is a number from 2 to 100, q is a number from 0 to 3, r is 0, and from 2 to 5 of all the R⁴ groups are hydrogen atoms; and is more preferably one where k is a number from 2 to 4, p is a number from 5 to 80, q is a number from 0 to 2, r is 0, and 2 or 3 of all the R⁴ groups are hydrogen atoms.

The hydrogen atoms may be located either at one or both ends of the molecular chain or partway along the molecular chain, or may be located at both such places. However, it is preferable for the hydrogen atoms to be located at least at one or both ends of the molecular chain, and more preferable for the hydrogen atoms to be located at both ends of the molecular chain.

Specific examples of organohydrogenpolysiloxanes of formula (6) include 1,1,3,3-tetramethyldisiloxane, dimethylpolysiloxane capped at both ends of the molecular chain with dimethylhydrogensiloxy groups, methylhydrogenpolysiloxane capped at both ends of the molecular chain with dimethylhydrogensiloxy groups, methylhydrogensiloxane/dimethylsiloxane copolymers capped at both ends of the molecular chain with dimethylhydrogensiloxy groups, methylhydrogensiloxane/diphenylsiloxane copolymers capped at both ends of the molecular chain with dimethylhydrogensiloxy groups, methylhydrogensiloxane/dimethylsiloxane/diphenylsiloxane copolymers capped at both ends of the molecular chain with dimethylhydrogensiloxy groups, copolymers comprising (CH₃)₃SiO_{1/2} units, (CH₃)₂HSiO_{1/2} units, (CH₃)₂SiO units and CH₃SiO_{3/2} units, copolymers comprising (CH₃)₂HSiO_{1/2} units, (CH₃)₂SiO units and CH₃SiO_{3/2} units, copolymers comprising (CH₃)₂HSiO_{1/2} units, (C₆H₅)₂SiO units, (CH₃)₂SiO units and CH₃SiO_{3/2} units, copolymers comprising (CH₃)(C₆H₅)HSiO_{1/2} units, (CH₃)₂SiO units and CH₃SiO_{3/2} units, and copolymers comprising (CH₃)₂HSiO_{1/2} units, (CH₃)₂SiO units and C₆H₅SiO_{3/2} units. One of these may be used alone or two or more may be used together.

Of these, 1,1,3,3-tetramethyldisiloxane, dimethylpolysiloxanes capped at both ends of the molecular chain with dimethylhydrogensiloxy groups, and copolymers comprising (CH₃)₂HSiO_{1/2} units, (CH₃)₂SiO units and CH₃SiO_{3/2} units are preferred.

### (b) Compound Having Hydroxyl Group and Aliphatic Unsaturated Group

A compound of formula (7) below may be used as the compound having a hydroxyl group and an aliphatic unsaturated group 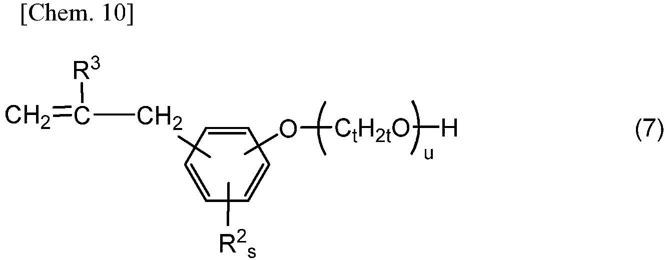 (wherein R², R³, s, t and u are the same as above).

Non-limiting examples of the group of formula (7) include those of the following formulas. One of these may be used alone or two or more may be used together. 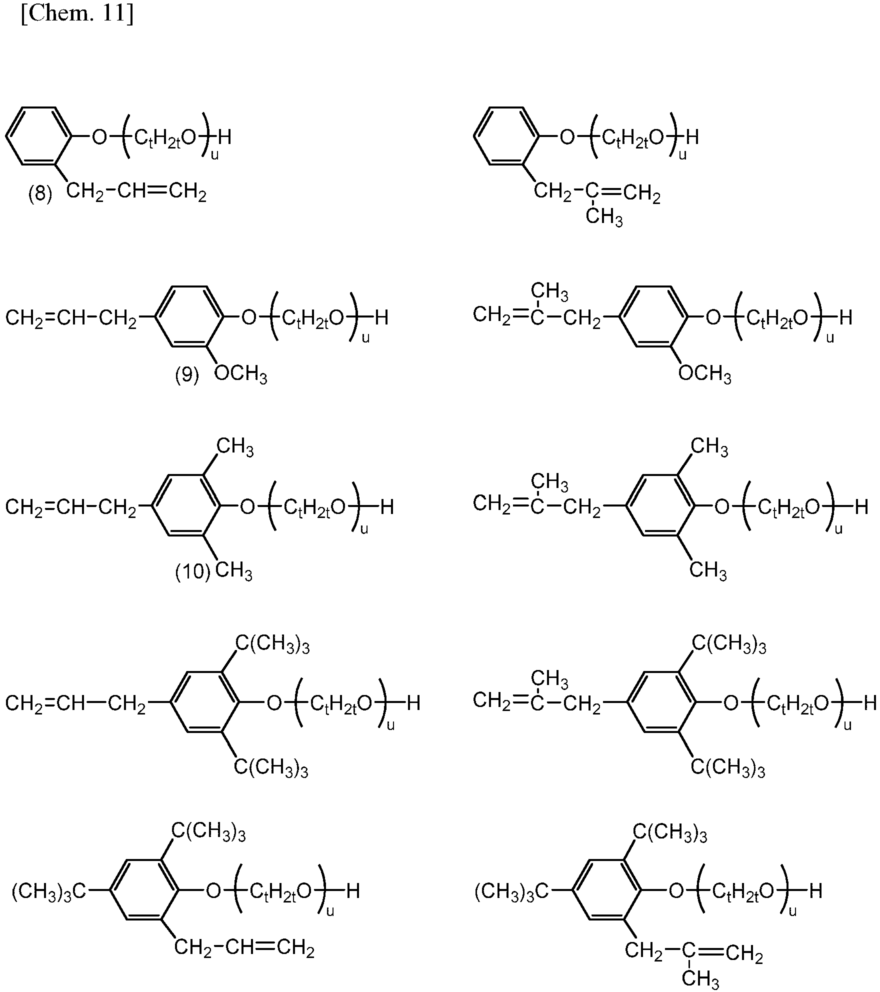 In these formulas, t and u are the same as above.

Of these, the compounds of formulas (8) to (10) below are preferred. 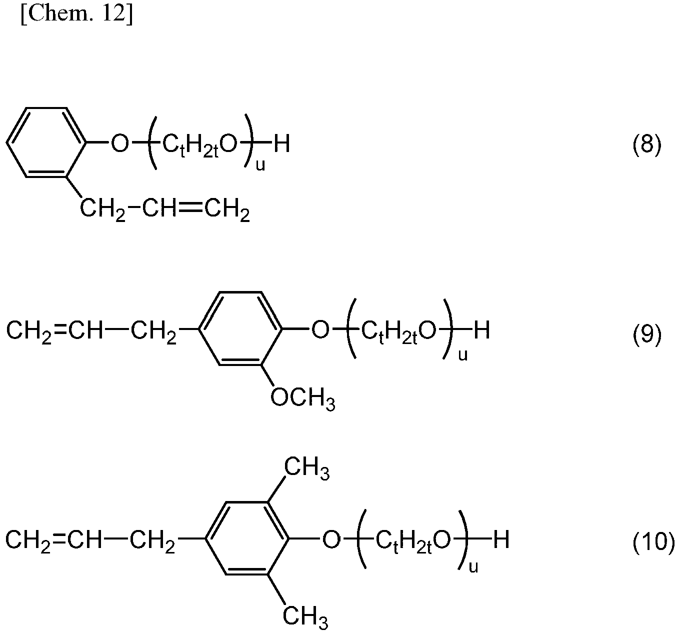 (wherein t and u are the same as above).

Specific examples of groups of formulas (8) to (10) include, but are not limited to, those of the following formulas. Of these, the compounds of formulas (8a), (9a) to (9e) and (10a) are preferred.

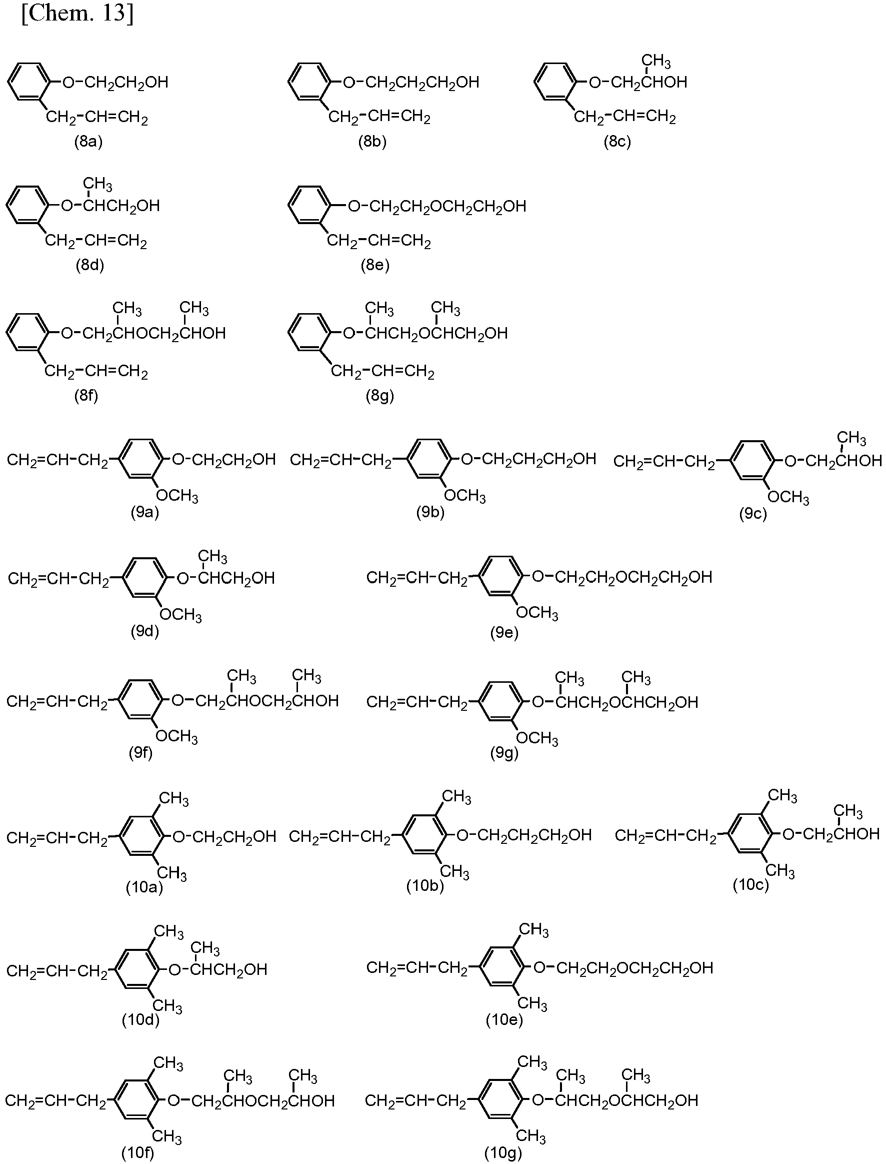

The compound of formula (7) having a hydroxyl group and an aliphatic unsaturated group can be obtained by, for example, the following method.

In cases where a phenol compound having an allyl group on the molecule that is readily available as a commercial product, such as o-allylphenol or eugenol (2-methoxy-4-allylphenol), is used as a starting material, the desired compound can be obtained by using a known method to addition react a given amount of, for example, ethylene oxide, propylene oxide, butylene oxide or tetrahydrofuran, or a mixture of these, with a phenolic hydroxyl group.

Alternatively, in cases where a phenol compound such as phenol, 2,6-dimethylphenol, 2,4-di-t-butylphenol or 2,6-di-t-butylphenol is used as a starting material, allyl (or methallyl) phenyl ether is obtained by first using a known method to react a halogenated allyl compound such as allyl bromide, allyl chloride or methallyl chloride with these phenol compounds under basic conditions.

Next, a thermal rearrangement reaction is carried out on the allyl group, giving allylated (or methallylated) phenol. The desired compound can be obtained by, in the same way as described above, addition reacting this with a given amount of, for example, ethylene oxide, propylene oxide, butylene oxide or tetrahydrofuran, or a mixture thereof.

Because the thermal rearrangement reaction on the allyl group arises at the ortho position or para position, in order to obtain a high-purity product, it is more preferable to use a compound such as 2,6-dimethylphenol, 2,4-di-t-butylphenol or 2,6-d-t-butylphenol in which, of the ortho positions and para positions, only one position is vacant.

In the reaction of an organohydrogenpolysiloxane with a compound having a hydroxyl group and an aliphatic unsaturated group, the hydroxyl group and aliphatic unsaturated group-containing compound is furnished to the reaction in an amount that is preferably a molar ratio representing an excess number of moles of aliphatic unsaturated groups (ally groups or methallyl groups) on the hydroxyl and aliphatic unsaturated group-containing compound with respect to the number of moles of hydrosilyl groups on the organohydrogenpolysiloxane.

For example, it is desirable for the molar ratio to be such that the number of moles of aliphatic unsaturated groups per mole of hydrosilyl groups is preferably from 1 to 5, more preferably from 1 to 2, and even more preferably from 1 to 1.5. At less than 1 mole, the amount of aliphatic unsaturated groups may be inadequate and dehydrogenation may readily arise. On the other hand, at more than 5 moles, a large amount of the hydroxyl group and aliphatic unsaturated group-containing compound remains unreacted in the reaction system, which is sometimes uneconomical.

Hydrosilylation between the organohydrogenpolysiloxane of above formula (6) and the hydroxyl group and aliphatic unsaturated group-containing compound of above formula (7) is preferably carried out in the presence of a catalyst. The catalyst is not particularly limited; a known addition reaction catalyst may be used.

Exemplary catalysts include uncombined platinum group metals such as platinum (including platinum black), palladium, rhodium and ruthenium, and metal catalysts containing these platinum group metals and gold, nickel, cobalt or the like. Of these, a catalyst containing platinum, palladium or rhodium is especially preferred.

Specific examples of catalysts containing platinum, palladium or rhodium include PtCl₄, H₂PtCl₆·6H₂O, Pt-ether complexes, Pt-olefin complexes, PdCl₂(PPh₃)₂, PdCl₂(PhCN)₂, RhCl₂(PPh₃)₃ (in the formulas, Ph stands for a phenyl group), and complexes of platinum chloride, chloroplatinic acid or a salt of chloroplatinic acid with a vinyl group-containing siloxane. One of these catalysts may be used alone, or mixtures of two or more may be used.

Of these, a platinum-containing metal catalyst is more preferred. A Karstedt catalyst (a complex of 1,1,3,3-tetramethyl-1,3-divinyldisiloxane with sodium bicarbonate-neutralized chloroplatinic acid) is especially preferred.

If necessary, these catalysts may be used after dilution with solvents such as alcohols, aromatic compounds, hydrocarbons, ketones or basic solvents.

The amount of catalyst is not particularly limited, so long as it is a catalytic amount. A catalytic amount is an amount sufficient to cause the addition reaction to proceed. For example, the amount of the above metal catalyst, in terms of the main metal therein, per 100 parts by weight of the hydrogenpolysiloxane is preferably 0.02 part by weight or less, more preferably from 0.00001 to 0.02 part by weight, even more preferably from 0.0001 to 0.01 part by weight, and most preferably from 0.0003 to 0.005 part by weight.

The total amount of catalyst may be added at the start of the reaction, or the catalyst may be added in divided amounts during the course of the reaction.

The reaction can be made to proceed even with a small amount of catalyst. However, when the amount of catalyst is too small, the reaction rate may become too slow. Hence, the amount is preferably at or greater than the lower limit value mentioned above. The reaction rate does not particularly improve when the amount of catalyst is excessive, and so an excessive amount of catalyst may be uneconomical.

When much residual metal catalyst is present in the resulting hydroxyl group-containing siloxane, this may cause discoloration. Hence, it is preferable for the amount of residual metal catalyst to be low. In the preparation method of the invention, the amount of metal catalyst present in the resulting hydroxyl group-containing siloxane, expressed in terms of the amount of atoms of the main metal per 100 parts by weight of the siloxane, may be set to preferably 0.02 part by weight or less, more preferably 0.01 part by weight or less, and even more preferably 0.005 part by weight or less.

Following completion of the addition reaction, residual metal catalyst may be adsorbed and removed by means of, for example, activated carbon.

Unlike methods for synthesizing known hydroxyalkyl group-containing polysiloxanes, one characteristic of the hydrosilylation reaction between an organohydrogenpolysiloxane and a hydroxyl group and aliphatic unsaturated group-containing compound in this invention is that it can be carried out without the use of a solvent, although a solvent may be used, if necessary, provided that doing so does not adversely affect the object of the invention.

Examples of the solvent include toluene, xylene, benzene, hexane, cyclohexane, methylcyclohexane, ethylcyclohexane, chloroform, dichloromethane, carbon tetrachloride, tetrahydrofuran (THF), diethyl ether, acetone, methyl ethyl ketone, dimethyl formamide (DMF) and acetonitrile.

When a solvent is used, the solvent may or may not be removed by distillation following completion of the addition reaction.

The hydrosilylation reaction temperature is preferably between 20°C and 200°C, more preferably between 40°C and 180°C, and even more preferably between 60°C and 150°C. The reaction time is preferably up to 20 hours, more preferably up to 12 hours, and even more preferably up to 8 hours.

With such a method of preparation, an organosilicon compound having a highly reactive hydroxyl group on the molecule can be efficiently obtained.

The hydroxyl group-containing organosilicon compound of the invention has a highly reactive hydroxyl group on the molecule, making it useful in a variety of applications, such as a starting material for the synthesis of polyester resins, urethane resins and the like, and as a paint additive.

### EXAMPLES

Examples and Comparative Examples are given below by way of illustration, although the invention is not limited by these Examples.

In the Examples below, the kinematic viscosity is the value measured at 25°C using the Cannon-Fenske viscometer specified in JIS Z 8803:2011. The hydroxyl value is a measured value obtained in accordance with JIS K 0070:1992.

### [Example 1]

The interior of a flask was nitrogen flushed and then charged with 186.9 g of the unsaturated alcohol compound of formula (11) below and 0.10 g of Karstedt catalyst (platinum concentration, 0.5 wt%), and heated to 70°C. To this was added dropwise, over a period of 35 minutes, 363.0 g of the methylhydrogenpolysiloxane of formula (12) below. Following the completion of dropwise addition, the system was stirred at 110°C for 2 hours.

Next, unreacted material was distilled off under heating and reduced pressure (220°C, 400 Pa). Activated carbon (2.5 g) was then added and the system was stirred at room temperature for 2 hours, following which filtration was carried out with a filter (NA-500, from Advantec Co., Ltd.), giving 497.0 g of the hydroxyl group-containing organopolysiloxane of formula (13) below.

The appearance was clear and colorless, the kinematic viscosity was 125 mm²/s, and the hydroxyl value was 112 mg KOH/g.

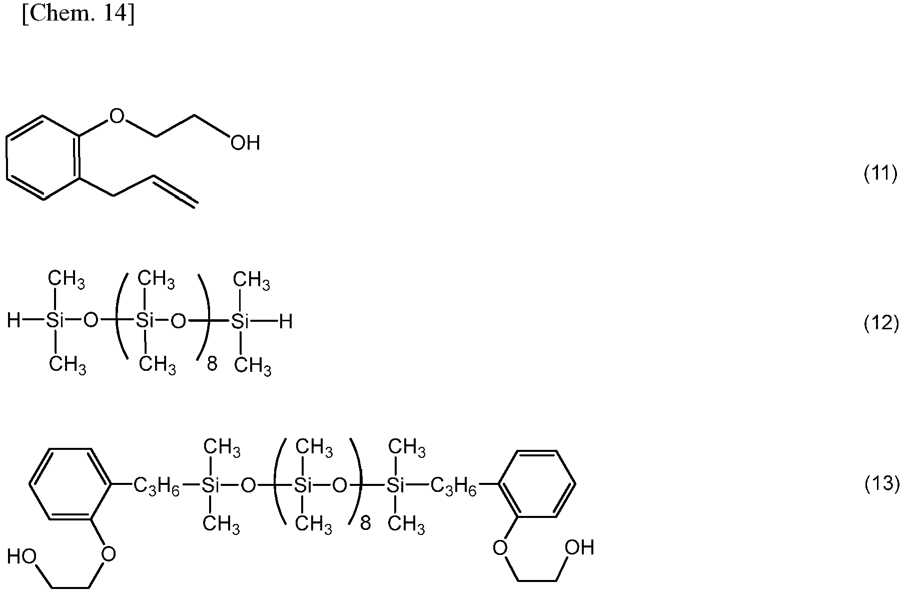

### [Example 2]

The interior of a flask was nitrogen flushed and then charged with 446.9 g of the unsaturated alcohol compound of formula (14) below and 0.23 g of Karstedt catalyst (platinum concentration, 0.5 wt%), and heated to 60°C. To this was added dropwise, over a period of 22 minutes, 742.8 g of the methylhydrogenpolysiloxane of formula (12) above. Following the completion of dropwise addition, the system was stirred at 110°C for 2 hours.

Next, unreacted material was distilled off under heating and reduced pressure (220°C, 400 Pa). Activated carbon (5.9 g) was then added and the system was stirred at room temperature for 2 hours, following which filtration was carried out with a filter (NA-500, from Advantec Co., Ltd.), giving 1,074.2 g of the hydroxyl group-containing organopolysiloxane of formula (15) below.

The appearance was clear and colorless, the kinematic viscosity was 372 mm²/s, and the hydroxyl value was 105 mg KOH/g.

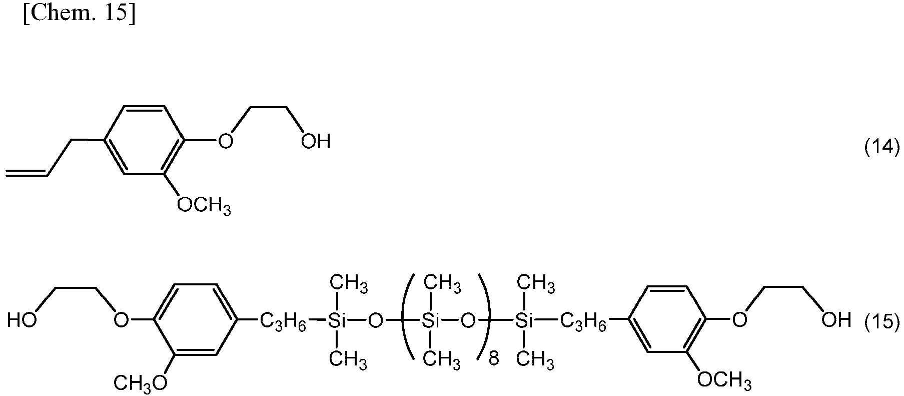

### [Example 3]

The interior of a flask was nitrogen flushed and then charged with 231.1 g of an unsaturated alcohol compound that is a mixture of the compound of formula (16) below and the compound of formula (17) below (content ratio of formula (16) compound and formula (17) compound: (16)/(17) = 86/14 mol%) and 0.11 g of Karstedt catalyst (platinum concentration, 0.5 wt%), and heated to 70°C. To this was added dropwise, over a period of 44 minutes, 363.0 g of the methylhydrogenpolysiloxane of formula (12) above. Following the completion of dropwise addition, the system was stirred at 110°C for 2 hours.

Next, unreacted material was distilled off under heating and reduced pressure (220°C, 400 Pa). Activated carbon (3.0 g) was then added and the system was stirred at room temperature for 2 hours, following which filtration was carried out with a filter (NA-500, from Advantec Co., Ltd.), giving 536.0 g of the hydroxyl group-containing organopolysiloxane of formula (18) below. In the product, the content ratio of primary hydroxyl groups and secondary hydroxyl groups was the same as the content ratio between the formula (16) compound and the formula (17) compound.

The appearance was clear and colorless, the kinematic viscosity was 283 mm²/s, and the hydroxyl value was 92.2 mg KOH/g.

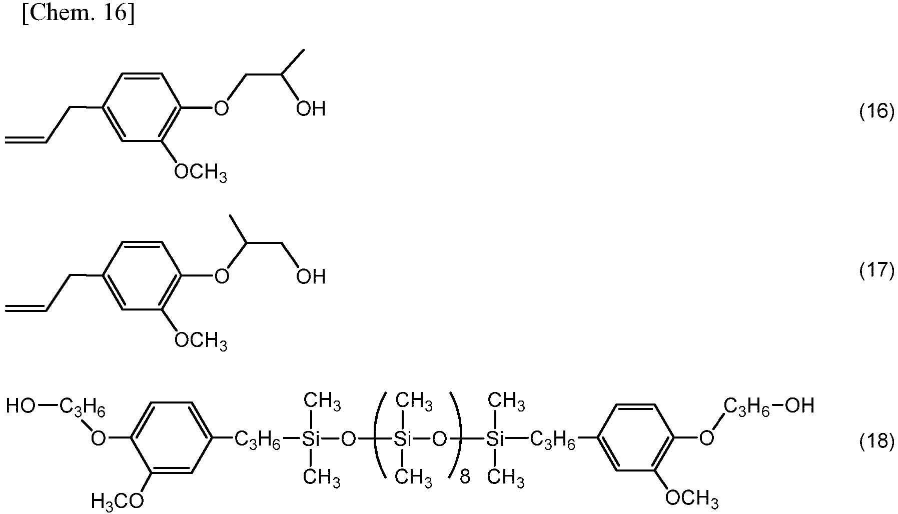

### [Example 4]

The interior of a flask was nitrogen flushed and then charged with 160.0 g of the unsaturated alcohol compound of formula (19) below and 0.07 g of Karstedt catalyst (platinum concentration, 0.5 wt%), and heated to 70°C. To this was added dropwise, over a period of 38 minutes, 219.0 g of the methylhydrogenpolysiloxane of formula (12) above. Following the completion of dropwise addition, the system was stirred at 110°C for 2 hours.

Next, unreacted material was distilled off under heating and reduced pressure (220°C, 400 Pa). Activated carbon (2.0 g) was then added and the system was stirred at room temperature for 2 hours, following which filtration was carried out with a filter (NA-500, from Advantec Co., Ltd.), giving 340.6 g of the hydroxyl group-containing organopolysiloxane of formula (20) below.

The appearance was clear and colorless, the kinematic viscosity was 408 mm²/s, and the hydroxyl value was 98.7 mg KOH/g.

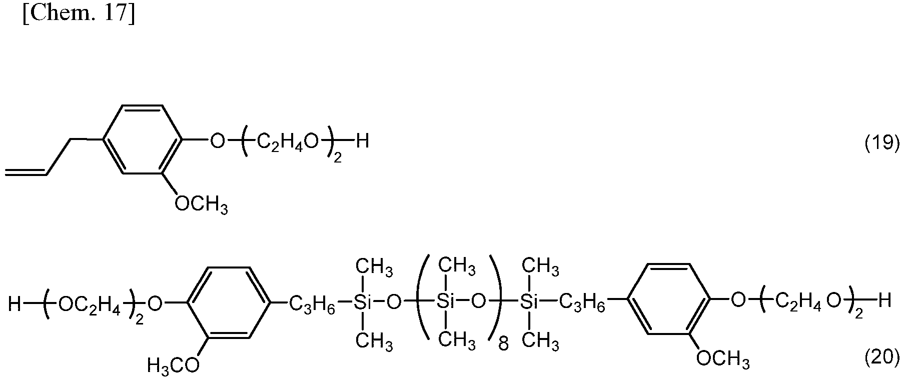

### [Example 5]

The interior of a flask was nitrogen flushed and then charged with 203.0 g of the unsaturated alcohol compound of formula (21) below and 0.11 g of Karstedt catalyst (platinum concentration, 0.5 wt%), and heated to 70°C. To this was added dropwise, over a period of 20 minutes, 325.2 g of the methylhydrogenpolysiloxane of formula (12) above. Following the completion of dropwise addition, the system was stirred at 110°C for 2 hours.

Next, unreacted material was distilled off under heating and reduced pressure (220°C, 400 Pa). Activated carbon (2.5 g) was then added and the system was stirred at room temperature for 2 hours, following which filtration was carried out with a filter (NA-500, from Advantec Co., Ltd.), giving 467.1 g of the hydroxyl group-containing organopolysiloxane of formula (22) below.

The appearance was clear and colorless, the kinematic viscosity was 290 mm²/s, and the hydroxyl value was 109 mg KOH/g.

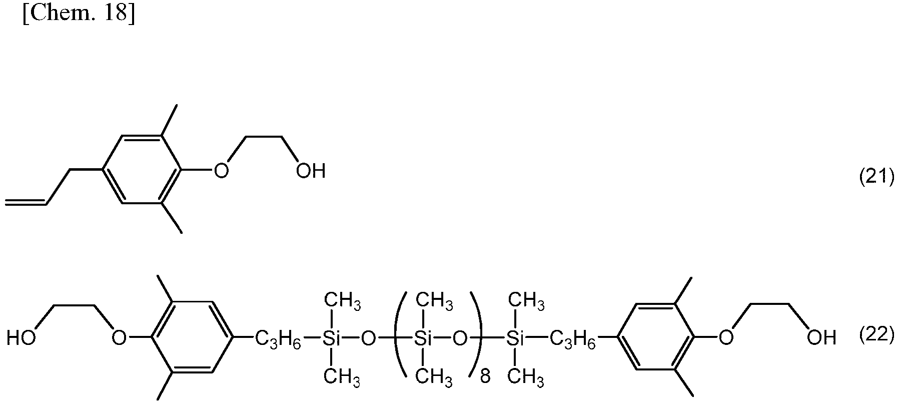

### [Example 6]

The interior of a flask was nitrogen flushed and then charged with 143.0 g of the unsaturated alcohol compound of formula (14) above and 0.04 g of Karstedt catalyst (platinum concentration, 0.5 wt%), and heated to 60°C. To this was added dropwise, over a period of 30 minutes, 43.9 g of 1,1,3,3-tetramethyldisiloxane. Following the completion of dropwise addition, the system was stirred at 110°C for 2 hours.

Next, unreacted material was distilled off under heating and reduced pressure (220°C, 400 Pa). Activated carbon (1.0 g) was then added and the system was stirred at room temperature for 2 hours, following which filtration was carried out with a filter (NA-500, from Advantec Co., Ltd.), giving 150.2 g of the hydroxyl group-containing organopolysiloxane of formula (23) below.

The appearance was clear and colorless, the kinematic viscosity was 3,500 mm²/s, and the hydroxyl value was 203 mg KOH/g.

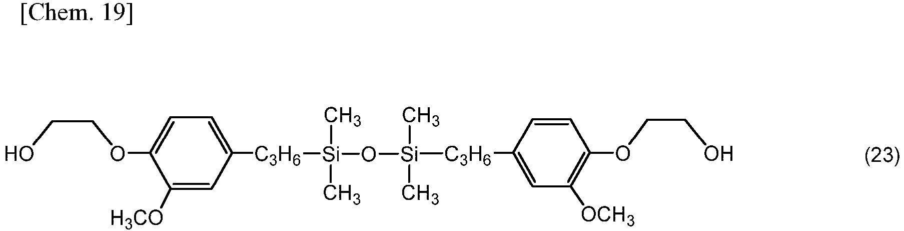

### [Example 7]

The interior of a flask was nitrogen flushed and then charged with 216.0 g of the unsaturated alcohol compound of formula (14) above and 0.20 g of Karstedt catalyst (platinum concentration, 0.5 wt%), and heated to 70°C. To this was added dropwise, over a period of 10 minutes, 798.0 g of the methylhydrogenpolysiloxane of formula (24) below. Following the completion of dropwise addition, the system was stirred at 110°C for 2 hours.

Next, unreacted material was distilled off under heating and reduced pressure (220°C, 400 Pa). Activated carbon (5.0 g) was then added and the system was stirred at room temperature for 2 hours, following which filtration was carried out with a filter (NA-500, from Advantec Co., Ltd.), giving 923.4 g of the hydroxyl group-containing organopolysiloxane of formula (25) below.

The appearance was clear and colorless, the kinematic viscosity was 218 mm²/s, and the hydroxyl value was 55.7 mg KOH/g.

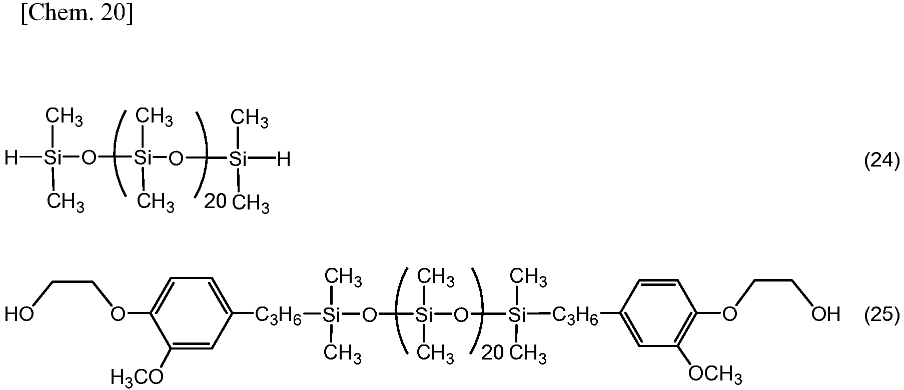

### [Example 8]

The interior of a flask was nitrogen flushed and then charged with 90.0 g of the unsaturated alcohol compound of formula (14) above and 0.14 g of Karstedt catalyst (platinum concentration, 0.5 wt%), and heated to 70°C. To this was added dropwise, over a period of 10 minutes, 621.0 g of the methylhydrogenpolysiloxane of formula (26) below. Following the completion of dropwise addition, the system was stirred at 110°C for 2 hours.

Next, unreacted material was distilled off under heating and reduced pressure (220°C, 400 Pa). Activated carbon (3.5 g) was then added and the system was stirred at room temperature for 2 hours, following which filtration was carried out with a filter (NA-500, from Advantec Co., Ltd.), giving 650.2 g of the hydroxyl group-containing organopolysiloxane of formula (27) below.

The appearance was clear and colorless, the kinematic viscosity was 242 mm²/s, and the hydroxyl value was 30.4 mg KOH/g.

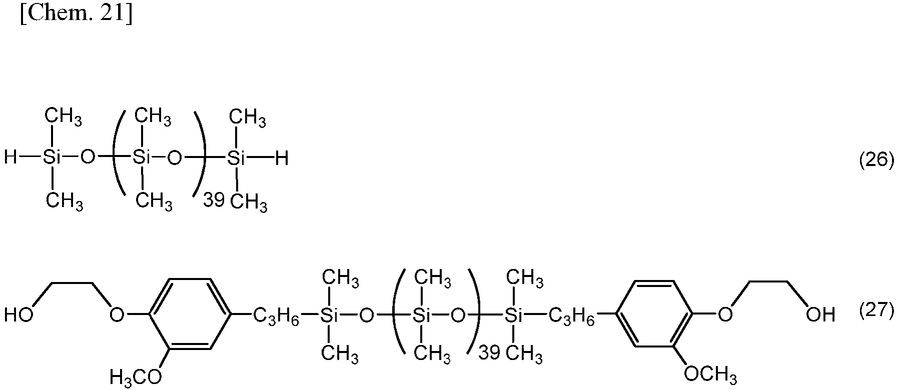

### [Example 9]

The interior of a flask was nitrogen flushed and then charged with 103.5 g of the unsaturated alcohol compound of formula (14) above and 0.22 g of Karstedt catalyst (platinum concentration, 0.5 wt%), and heated to 80°C. To this was added dropwise, over a period of 5 minutes, 1,012.6 g of the methylhydrogenpolysiloxane of formula (28) below. Following the completion of dropwise addition, the system was stirred at 110°C for 2 hours.

Next, unreacted material was distilled off under heating and reduced pressure (220°C, 400 Pa). Activated carbon (5.6 g) was then added and the system was stirred at room temperature for 2 hours, following which filtration was carried out with a filter (NA-500, from Advantec Co., Ltd.), giving 1,020.3 g of the hydroxyl group-containing organopolysiloxane of formula (29) below.

The appearance was clear and colorless, the kinematic viscosity was 244 mm²/s, and the hydroxyl value was 23.0 mg KOH/g.

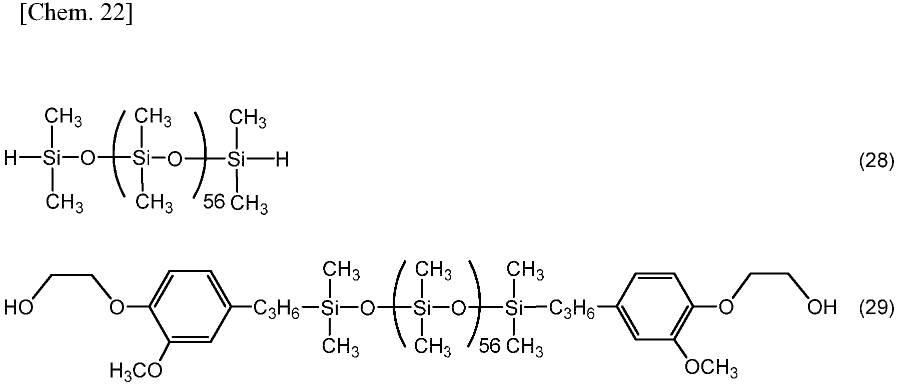

### [Example 10]

The interior of a flask was nitrogen flushed and then charged with 49.1 g of the unsaturated alcohol compound of formula (11) above and 372.0 g of the methylhydrogenpolysiloxane of formula (30) below, and heated to 80°C. To this was added 0.10 g of Karstedt catalyst (platinum concentration, 0.5 wt%) and the system was stirred at 110°C for 3 hours.

Next, unreacted material was distilled off under heating and reduced pressure (220°C, 400 Pa). Activated carbon (2.1 g) was then added and the system was stirred at room temperature for 2 hours, following which filtration was carried out with a filter (NA-500, from Advantec Co., Ltd.), giving 385.3 g of the hydroxyl group-containing organopolysiloxane of formula (31) below.

The appearance was clear and colorless, the kinematic viscosity was 173 mm²/s, and the hydroxyl value was 38.0 mg KOH/g.

(H(CH₃)₂SiO_{1/2})_{3.0}((CH₃)₂SiO_{2/2})_{56.5}(CH₃SiO_{3/2})_{1.0} (30)

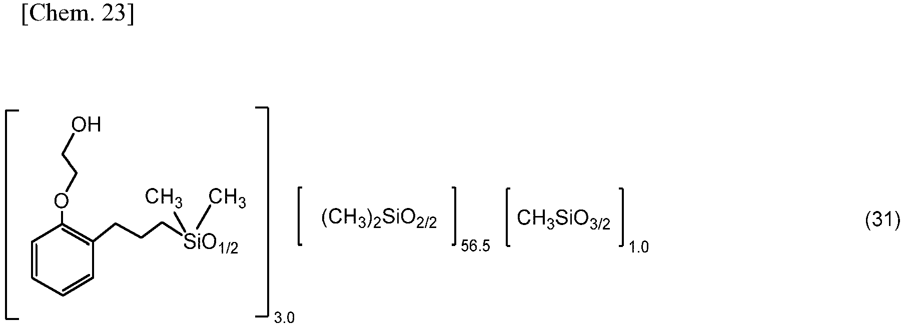

### [Example 11]

The interior of a flask was nitrogen flushed and then charged with 182.3 g of the unsaturated alcohol compound of formula (14) above and 0.30 g of Karstedt catalyst (platinum concentration, 0.5 wt%), and heated to 80°C. To this was added dropwise, over a period of 10 minutes, 1,296.0 g of the methylhydrogenpolysiloxane of formula (32) below. Following the completion of dropwise addition, the system was stirred at 110°C for 2 hours.

Next, unreacted material was distilled off under heating and reduced pressure (220°C, 400 Pa). Activated carbon (7.4 g) was then added and the system was stirred at room temperature for 2 hours, following which filtration was carried out with a filter (NA-500, from Advantec Co., Ltd.), giving 1,404.0 g of the hydroxyl group-containing organopolysiloxane of formula (33) below.

The appearance was clear and colorless, the kinematic viscosity was 231 mm²/s, and the hydroxyl value was 33.0 mg KOH/g.

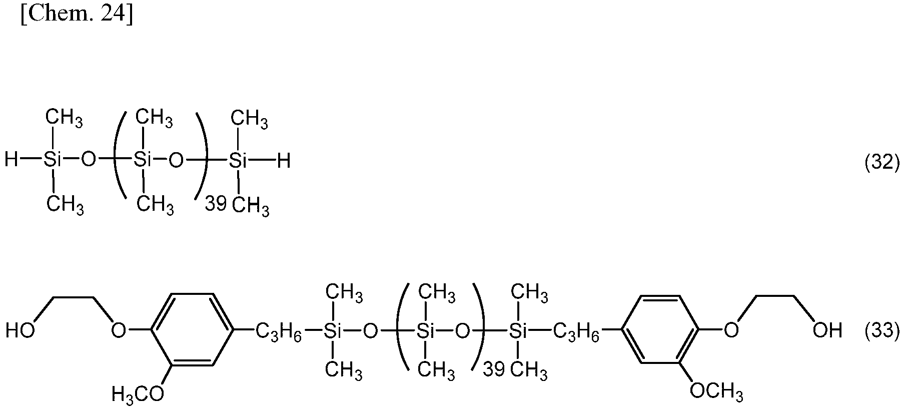

### [Example 12]

The interior of a flask was nitrogen flushed and then charged with 80.8 g of the unsaturated alcohol compound of formula (21) above and 0.25 g of Karstedt catalyst (platinum concentration, 0.5 wt%), and heated to 80°C. To this was added dropwise, over a period of 5 minutes, 762.7 g of the methylhydrogenpolysiloxane of formula (28) above. Following the completion of dropwise addition, the system was stirred at 110°C for 2 hours. Next, unreacted material was distilled off under heating and reduced pressure (230°C, 400 Pa). Activated carbon (4.5 g) was then added and the system was stirred at room temperature for 2 hours, following which filtration was carried out with a filter (NA-500, from Advantec Co., Ltd.), giving 776.0 g of the hydroxyl group-containing organopolysiloxane of formula (34) below.

The appearance was clear and colorless, the kinematic viscosity was 191 mm²/s, and the hydroxyl value was 24.5 mg KOH/g.

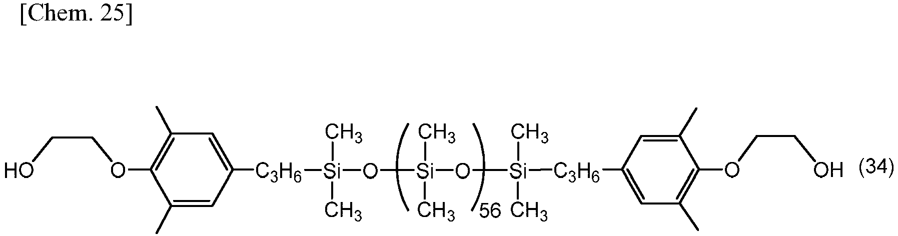

### [Comparative Example 1]

The interior of a flask was nitrogen flushed and then charged with 88.2 g of allyl glycol, 56.0 g of 2-propanol and 0.12 g of Karstedt catalyst (platinum concentration, 0.5 wt%), and heated to 70°C. To this was added dropwise, over a period of 40 minutes, 224.0 g of the methylhydrogenpolysiloxane of formula (12). Following the completion of dropwise addition, the system was stirred for 4 hours under 2-propanol refluxing.

Next, unreacted material was distilled off under heating and reduced pressure (120°C, 400 Pa). Activated carbon (1.5 g) was then added and the system was stirred at room temperature for 2 hours, following which filtration was carried out with a filter (NA-500, from Advantec Co., Ltd.), giving 272.5 g of the hydroxyl group-containing organopolysiloxane of formula (35) below.

The appearance was clear and colorless, the kinematic viscosity was 30.0 mm²/s, and the hydroxyl value was 116 mg KOH/g.

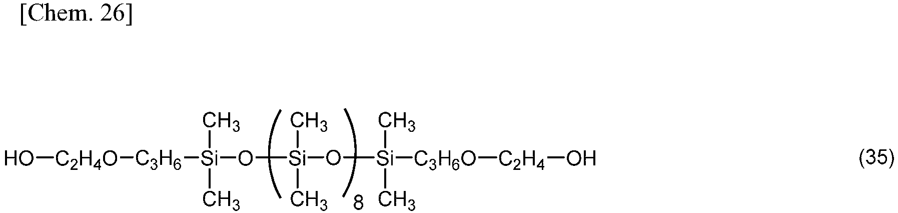

Two grams of the hydroxyl group-containing organopolysiloxane obtained in, respectively, Examples 1 to 5 and Comparative Example 1 was weighed out into a 50 mL beaker and the weight-average molecular weight and percent change thereof when heated in air at 120°C for one week were determined. The method of measuring the weight-average molecular weight was as described above.

As shown below, each of the hydroxyl group-containing organopolysiloxanes of the invention had a small percent change in the weight-average molecular weight following one week of heating at 120°C and an excellent heat resistance.

**[Table 1]**

| | Weight-average molecular weight | | Percent change (%) |
|---|---|---|---|
| | Before heating test | After heating test | |
| Example 1 | 1,290 | 1,640 | +27.1 |
| Example 2 | 1,270 | 1,300 | +2.4 |
| Example 3 | 1,400 | 1,440 | +2.9 |
| Example 4 | 1,450 | 1,520 | +4.8 |
| Example 5 | 1,440 | 1,470 | +2.1 |
| Comparative Example 1 | 1,290 | 7,590 | +488 |

## Claims

1. A hydroxyl group-containing organosilicon compound of general formula (1) below
(R¹₃SiO_{1/2})ₖ(R¹₂SiO_{2/2})ₚ(R¹SiO_{3/2})_{q}(SiO_{4/2})ᵣ (1)
[wherein each R¹ is independently a group selected from monovalent hydrocarbon groups of 1 to 10 carbon atoms and groups of formula (2) below, with the proviso that at least one of all the R¹ groups is a group of formula (2) below; k, p, q and r are numbers such that k > 0, p ≥ 0, q ≥ 0 and r ≥ 0, with the proviso that k+p+q ≥ 2; and the respective siloxane units shown in parentheses are bonded in any order 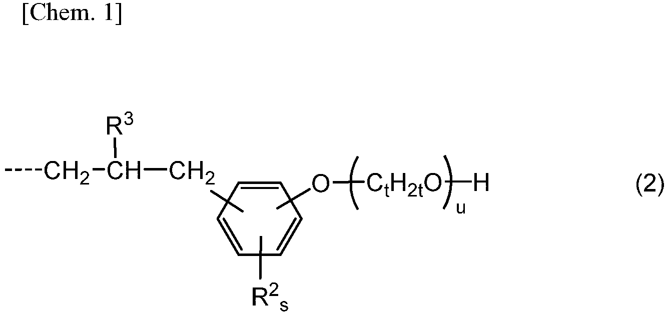 (wherein each R² is independently a hydrogen atom or a group selected from monovalent hydrocarbon groups of 1 to 5 carbon atoms and alkoxy groups of 1 to 5 carbon atoms, R³ is a hydrogen atom or a methyl group, s is an integer from 0 to 4, t is an integer from 2 to 4, u is a number from 1 to 3, and the dashed line represents an available bond)].

2. The hydroxyl group-containing organosilicon compound of claim 1, wherein the groups of formula (2) are groups of any of formulas (3) to (5) below 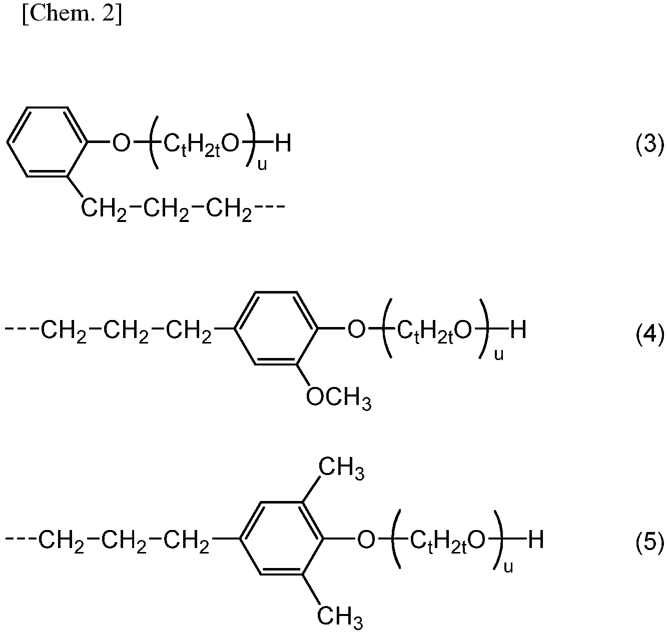 (wherein t and u are the same as above and the dashed line represents an available bond).

3. The hydroxyl group-containing organosilicon compound of claim 1 or 2 wherein, in formula (1), k is a number from 2 to 5, p is a number from 2 to 100, q is a number from 0 to 3, r is 0, and from 2 to 5 of the R¹ groups are groups of formula (2).

4. The hydroxyl group-containing organosilicon compound of any one of claims 1 to 3, wherein the compound is the product of an addition reaction between an organohydrogenpolysiloxane of general formula (6) below
(R⁴₃SiO_{1/2})ₖ(R⁴₂SiO_{2/2})ₚ(R⁴SiO_{3/2})_{q}(SiO_{4/2})ᵣ (6)
(wherein each R⁴ is independently a hydrogen atom or a monovalent hydrocarbon group of 1 to 10 carbon atoms, with the proviso that at least one of all the R⁴ groups is a hydrogen atom; and k, p, q and r are the same as above; and the respective siloxane units shown in parentheses are bonded in any order) and a compound of general formula (7) below containing a hydroxyl group and an aliphatic unsaturated group 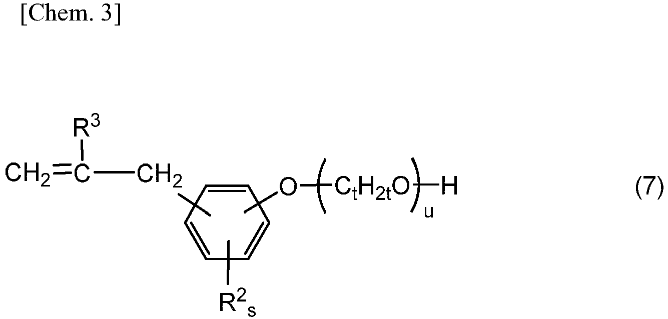 (wherein R², R³ s, t and u are the same as above).

5. The hydroxyl group-containing organosilicon compound of claim 4 wherein the compound of general formula (7) containing a hydroxyl group and an aliphatic unsaturated group is a compound of any of formulas (8) to (10) below 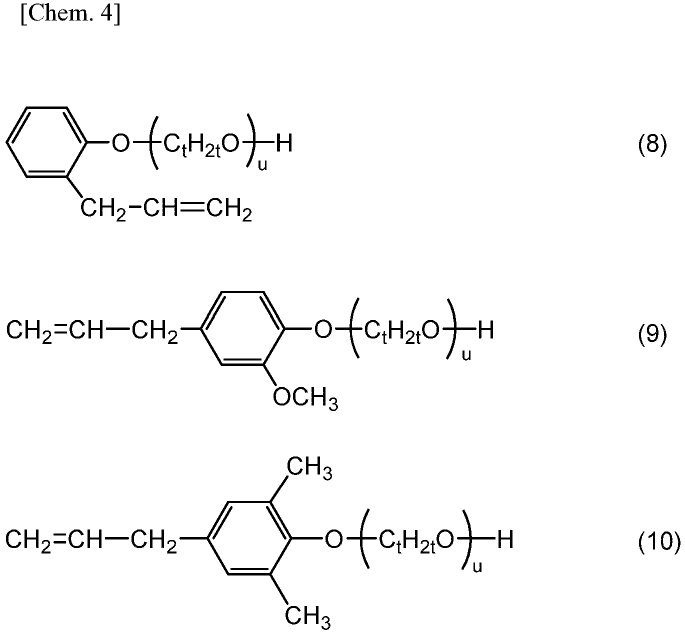 (wherein t and u are the same as above).

6. The hydroxyl group-containing silicon compound of claim 4 or 5 wherein, in formula (6), k is a number from 2 to 5, p is a number from 2 to 100, q is a number from 0 to 3, r is 0 and from 2 to 5 of all the R⁴ groups are hydrogen atoms.
